# EUROPEAN PATENT APPLICATION

(11) **EP 2 248 785 A1**
(43) Date of publication of application: **10.11.2010**
(21) Application number: 10155325.3
(22) Date of filing: 03.03.2010
(51) Int. Cl.: C04B 35/573, C04B 35/80, B29C 70/30, B29C 70/44, B32B 18/00, F01D 9/04, F01D 11/12, F01D 25/24, B32B 37/00

(54) **Process For Inhibiting Delamination In A Bend Of A Continuous Fiber-Reinforced Composite Article**

(30) Priority: 07.05.2009 US 437024
(71) Applicant: General Electric Company, Schenectady, NY 12345 (US)
(72) Inventor: Corman, Gregory Scot, Ballston Lake, NY 12019 (US); MCGuigan, Henry Charles, Duanesburg, NY 12056 (US)
(74) Representative: Gray, Thomas

(57) **Abstract**

A process for inhibiting delamination in a bend (34) of a component formed of a continuous fiber-reinforced composite material having layers containing arrays of unidirectional fibrous elements (32) in a matrix material. A preform (30) of the component is formed by laying-up prepreg tapes corresponding to layers of the component. Each tape contains a matrix precursor, a binder, and an array of the fibrous elements (32). The tapes are laid-up so that the fibrous elements (32) of at least a first tape traverse the bend (34), and the fibrous elements (32) lie in planes (38,40) that are not perpendicular to the axis (36) of curvature of the bend (34). The preform (30) then undergoes thermal processing, during which delamination of the layers in the bend (34) is inhibited as a result of none of the fibrous elements (32) lying in a plane perpendicular to the axis (36) of curvature of the bend (34).

## Description

This invention was made with Government support under Agreement No. DE-FC02-00CH11047 awarded by the Department of Energy. The Government may have certain rights in the invention.

### BACKGROUND OF THE INVENTION

The present invention generally relates to composite articles and processes for their production. More particularly, this invention is directed to a process of fabricating composite articles containing multiple plies of continuous fiber reinforcement material, by which delamination of the plies within bends of such articles is inhibited.

Higher operating temperatures for gas turbine engines are continuously sought in order to increase their efficiency. Though significant advances in high temperature capabilities have been achieved through formulation of iron, nickel and cobalt-base superalloys, alternative materials have been investigated. Ceramic materials and ceramic matrix composite (CMC) materials are notable examples because their high temperature capabilities can significantly reduce cooling air requirements. CMC materials are generally characterized by a ceramic fiber reinforcement material embedded in a ceramic matrix material. The reinforcement material may be discontinuous short fibers dispersed in the matrix material or continuous fibers or fiber bundles oriented within the matrix material, and serves as the load-bearing constituent of the CMC in the event of a matrix crack. In turn, the ceramic matrix protects the reinforcement material, maintains the orientation of its fibers, and serves to dissipate loads to the reinforcement material.

Continuous fiber reinforced ceramic composites (CFCC) are a type of CMC that offers light weight, high strength, and high stiffness for a variety of high temperature load-bearing applications, including shrouds, combustor liners, nozzles, and other high-temperature components of gas turbine engines. Continuous fibers (filaments) of a CFCC material may be arranged to form a unidirectional array of individual fibers that are roughly parallel. Alternatively, fibers may be bundled in tows that are arranged to form a unidirectional array of tows, or bundled in tows that are woven to form a two-dimensional fabric or woven or braided to form a three-dimensional fabric. For three-dimensional fabrics, sets of unidirectional tows may, for example, be interwoven transverse to each other. In CFCC materials with unidirectional arrays of individual fibers, the fibers are typically arranged in alternating layers, each containing an array of unidirectional (parallel) fibers, with fibers in any given layer being transverse to the unidirectional fibers of each adjacent layer.

Of particular interest to high-temperature applications are silicon-based ceramic materials, and particularly CMCs that contain silicon carbide (SiC) as the matrix and/or reinforcement material. A notable example of a CFCC has been developed by the General Electric Company under the name HiPerComp®, and contains continuous silicon carbide fibers in a matrix of silicon carbide and elemental silicon. Notable silicon carbide fiber materials include NICALON®, HI-NICALON®, and HI-NICALON® Type S fibers commercially available from Nippon Carbon Co., Ltd. Examples of SiC/Si-SiC (fiber/matrix) CMC and CFCC materials and processes are disclosed in commonly-assigned U.S. Patent Nos. 5,015,540, 5,330,854, 5,336,350, 5,628,938, 6,024,898, 6,258,737, 6,403,158, and 6,503,441, and commonly-assigned U.S. Patent Application Publication No. 2004/0067316. One such process is known as "prepreg" melt-infiltration, which in general terms entails the fabrication of CMCs using multiple prepreg layers, each in the form of a tape-like structure comprising the desired reinforcement material, a precursor of the ceramic matrix material, and one or more binders. A laminate preform is formed by laying up multiple prepreg tapes, and undergoes processing (including firing) to burn out the binders and convert the precursor to the desired ceramic matrix material. The resulting CMC contains multiple laminae, each derived from an individual prepreg tape. As a result of curing and firing the laminate preform, each lamina contains the reinforcement material encased in the ceramic matrix formed by conversion of the precursor during firing, and the laminae are bonded to each other by the ceramic matrix. The resulting CMC article then undergoes infiltration within molten silicon or another suitable material to fill porosity that formed as a result of removing the binder during burn-out.

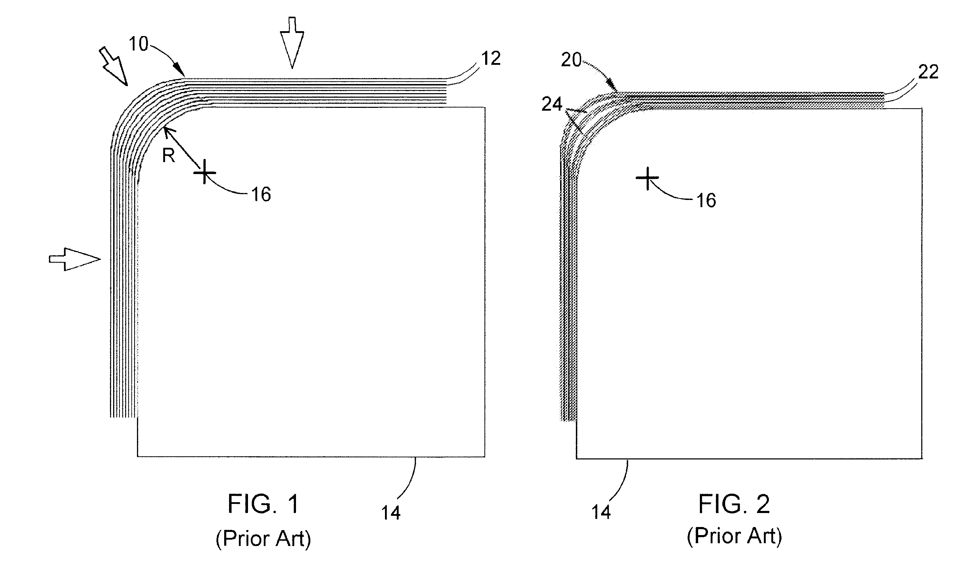

Delamination defects occur as a result of separation of the laminae within the CMC structure. FIGS. 1 and 2 are schematically illustrative of such defects. FIG. 1 represents a laminate preform 10 having a bend, which is characteristic of a CMC shroud disclosed in U.S. Patent No. 7,117,983. FIG. 1 depicts the appearance of the prepreg layers 12, and the conformance of the layers 12 to the tool 14 used to shape the preform 10. The prepreg layers 12 may have a variety of architectures, though of particular interest to the present invention are prepreg layers 12 having unidirectional array of continuous fibers, which will yield a CFCC material upon firing of the preform 10. A significant challenge is to obtain good compaction and minimal defects around the bend. Conventional practice is to arrange the continuous fibers to provide biaxial reinforcement of the composite material by utilizing a 0-90 fiber architecture, where alternating layers 12 contain fibers that are wrapped directly around the bend radius R and lie in a plane perpendicular to the axis 16 of curvature of the bend (designated herein as the zero- degree direction), while layers therebetween contain fibers that lie in planes roughly parallel to the axis 16 of curvature of the bend (designated herein as the ninety-degree direction).

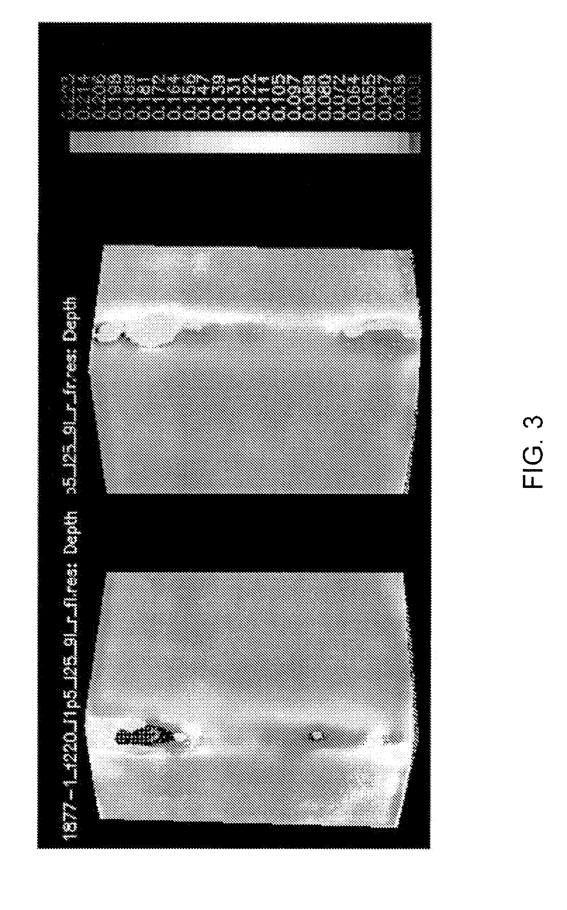

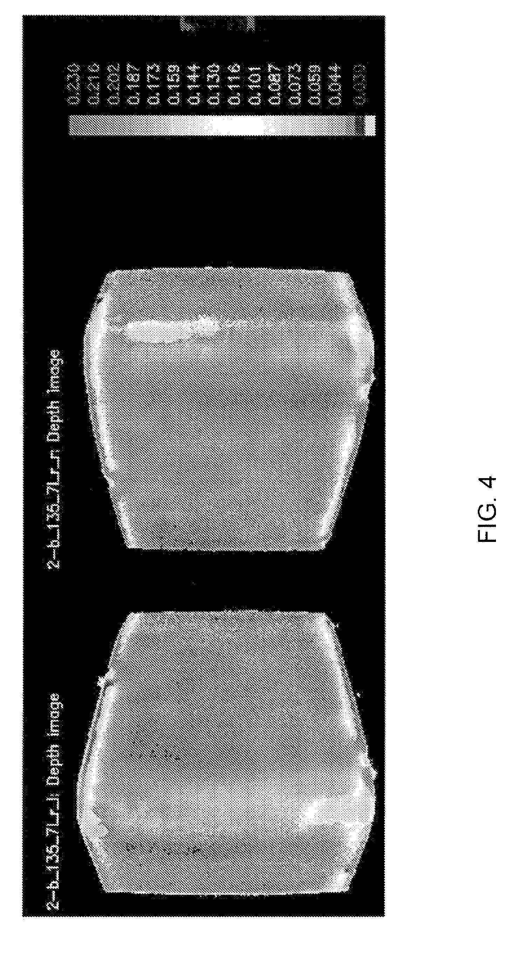

During lay-up and compaction, as occurs, for instance, during the heating of the laminate preform 10 under pressure, for example, during autoclaving, in-plane compressive strains are created in the outer prepreg layers 12 in response to through-thickness strains induced during compaction and by the geometry of the bend. The continuous fibers that are oriented directly around the bend radius R and lie in a plan perpendicular to the axis 16 of curvature of the bend will subsequently be subjected to high compressive stress along their axes. This compressive stress within the fibers is believed to cause defects in the composite in at least two ways. First, the fibers can buckle under the compressive stress, leading to the formation of wrinkles within the composite plies. Secondly, during subsequent burnout and infiltration process steps, the strain in the fibers is elastically released, which may cause delaminations 24 of the laminae 22 within the resulting CFCC article 20, as represented in FIG. 2. These defects are visible as light regions in the two infrared (IR) thermographic images of two CFCC shrouds shown in FIGS. 3 and 4.

In practice, interlaminar delaminations 24 of the type described above for CMC articles containing unidirectional fiber structures are not observed in CMC articles containing woven fiber plies, such as cloth and woven structures that tend to have better drapability and are thus less prone to forming interlaminar defects around bends. On the other hand, because interlaminar delaminations are a recognized problem for CFCC articles with unidirectional fiber structures, solutions have been investigated and proposed, as evident from U.S. Patent No. 5,348,602. However, solutions that do not entail special fixturing and steps would be desirable.

### BRIEF DESCRIPTION OF THE INVENTION

The present invention provides a process for inhibiting delamination in a bend of a component formed of a continuous fiber-reinforced composite material comprising layers (laminae) that are prone to delamination during thermal processing of the composite material.

According to a first aspect of the invention, each layer of the composite material contains an array of unidirectional fibrous elements in a matrix material, and at least a portion of the bend is defined by an axis of curvature. The process entails forming prepreg tapes, each containing a matrix precursor, a binder, and one of the arrays of the unidirectional fibrous elements so that each prepreg tape will form one of the layers of the composite when sufficiently heated to burn out the binder and convert the matrix precursor to the matrix material of the component. The prepreg tapes are then laid-up to form a preform of the component and define the bend thereof, and so that the unidirectional fibrous elements of at least a first of the tapes traverse the bend and the unidirectional fibrous elements of all the tapes lie in planes that are not perpendicular to the axis of curvature of the bend. The preform is then heated under external pressure to consolidate the prepreg tapes. According to a preferred aspect of the invention, delamination of the prepreg tapes in the bend, and therefore delamination of the resulting composite layers in the bend, is inhibited as a result of none of the unidirectional fibrous elements lying in a plane that is perpendicular to the axis of curvature of the bend, as opposed to orientations perpendicular to the axis.

Another aspect of the invention are the components produced by the process described above. A nonlimiting example is a turbine shroud of a gas turbine engine.

A significant advantage of this invention is the ability to produce continuous fiber-reinforced composite components, and particularly continuous fiber-reinforced ceramic composite (CFCC) components having shapes with bends that are prone to delamination during thermal processing of the composite material. By orienting the individual fibers within unidirectional arrays to be oriented at an angle other than perpendicular to the bend axis, interlaminar defects caused by delamination can be greatly inhibited. While +/!45 degree fiber architectures have been shown to be effective in inhibiting delamination, other angles are also within the scope of the invention, particularly in a range of about ten to ninety degrees from a plane perpendicular to the bend axis of curvature. Particular nonlimiting examples include biaxial fiber architectures such as +80/!10, +70/!20, +60/!30, etc., as well as multi-axial fiber architectures such as 90/+30/!30, etc.

Other aspects and advantages of this invention will be better appreciated from the following detailed description.

### BRIEF DESCRIPTION OF THE DRAWINGS

There follows a detailed description of embodiments of the invention by way of example only with reference to the accompanying drawings, in which:
FIG. 1 schematically represents a fragmentary cross-sectional view of a laminate preform having a bend, characteristic of a CFCC shroud known in the art;
FIG. 2 schematically represents a fragmentary cross-sectional view of a CFCC article produced by thermal processing of the laminate preform of FIG. 1, and presenting an interlaminar defect caused by delamination within the preform during thermal processing;
FIGS. 3 and 4 are infrared (IR) thermographic images of two CFCC shrouds with fiber architectures similar to that of FIG. 1, evidencing the presence of interlaminar defects caused by delamination during thermal processing of the shrouds;
FIG. 5 schematically represents a fragmentary perspective view of a laminate preform having a bend characteristic of a CFCC shroud known in the art, the orientation of individual fibers within an outer layer of the preform, and indicating the direction in which the fibers shift during thermal processing of the preform in accordance with an embodiment of the invention; and
FIG. 6 is an IR thermographic image of a CFCC shroud with a fiber architecture similar to that of FIG. 5, and evidencing the substantial absence of interlaminar defects following thermal processing of the shroud.

### DETAILED DESCRIPTION OF THE INVENTION

The present invention will be described in terms of processes for producing composite articles containing continuous fibers arranged to form unidirectional arrays of fibrous elements, and particularly processes for producing CFCC articles. Various composite materials are encompassed by the invention, a preferred but nonlimiting example being CFCC materials that contain silicon carbide reinforcement fibers in a ceramic matrix that contains silicon carbide. While various applications are foreseeable, particular applications include components of gas turbine engines, nonlimiting examples of which include turbine shrouds used in the hot gas paths of gas turbine engines.

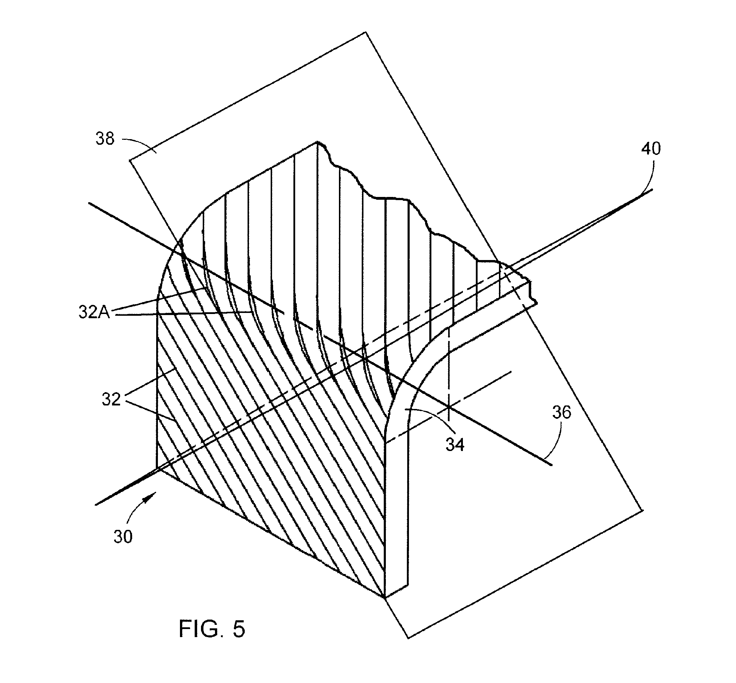

FIG. 5 schematically represents a portion of a laminate preform 30 for a CFCC shroud of a type disclosed in U.S. Patent No. 7,117,983, whose contents regarding the composition, fabrication and shape of a gas turbine shroud are incorporated herein by reference. The preform 30 and the shroud formed therefrom are preferably fabricated in accordance with any of the processes disclosed in U.S. Patent Nos. 5,015,540, 5,330,854, 5,336,350, 5,628,938, 6,024,898, 6,258,737, 6,403,158, and 6,503,441, and U.S. Patent Application Publication No. 2004/0067316. A preferred process is the aforementioned melt-infiltration process, in which case the laminate preform 30 of FIG. 5 is formed by laying up multiple prepreg tapes (not shown) and undergoes thermal processing in an autoclave, oven, and/or other suitable equipment to consolidate the tapes, burn out binders within the tapes, and convert a precursor within the tapes to the ceramic matrix material desired for the CFCC shroud, for example, silicon carbide. The resulting CFCC shroud contains multiple laminae, each derived from an individual prepreg tape. As a result of curing and firing the laminate preform 30, each lamina of the CFCC shroud preferably contains reinforcement fibers encased in the ceramic matrix material, which bonds the laminae to each other. Finally, the preferred process entails the melt infiltration step, during which the shroud is infiltrated with molten silicon or another suitable material to fill the porosity created during binder burn-out.

For the purpose of facilitating the present disclosure of the invention, the preform 30 of FIG. 5 is shown with a unidirectional array of continuous fibrous elements 32, such as individual fibers or fiber tows, exposed at the surface of the outermost tape, though it should be understood that the fibrous elements 32 would not likely be visible as a result of being fully encased in the tape precursor and binder. As the preform 30 for a CFCC component (shroud), the fibrous elements 32 within each prepreg tape are arranged in unidirectional arrays, i.e., oriented side-by-side and roughly parallel to each other. In addition, the fibrous elements 32 within alternating tapes are preferably parallel to each other but transverse to the fibrous elements 32 of the tapes between the alternating tape. More preferably, the fibrous elements 32 of adjacent contacting tapes are perpendicular to each other to provide biaxial reinforcement of the CFCC composite. The preform 30 can be constructed of any number of tapes, whose thicknesses will typically be in a range of up to several millimeters. Suitable fiber diameters and center-to-center fiber spacings will depend on the particular application, the thicknesses of the tapes, and other factors, and therefore are not represented to scale in FIG. 5. According to known practice, individual fibrous elements 32 can be coated with a release agent, such as boron nitride (BN) or carbon, to form a de-bond coating that allows for limited and controlled slip between the individual fibrous elements 32 and the ceramic matrix of the component, which has the desirable effect of arresting or at least inhibiting the propagation of cracks through the CFCC component.

To avoid or at least greatly inhibit delamination defects that occur during thermal processing of prior art preforms of the type shown in FIGS. 1 through 4, each fibrous element 32 of the preform 30 lies in a plane that is not perpendicular to the axis 36 of curvature of the bend 34 in the preform 30, such that the preform 30 does not contain elements 32 having what is referred to herein as a zero-degree fiber orientation. FIG. 5 depicts one such plane 38 for one of the fibrous elements 32, with the plane 38 shown inclined approximately forty-five degrees to the axis 36 of curvature for the preform bend 34, and therefore also approximately forty-five degrees to a plane perpendicular to the axis 36. As evident from FIG. 5, all of the fibrous elements 32 in the outermost tape of the preform 30 lie in planes that are roughly parallel to each other, and therefore also inclined approximately forty-five degrees to a plane perpendicular to the axis 36. In contrast, fibers (not shown) in the tape immediately beneath and contacting the outermost tape are oriented transverse, for example, perpendicular, to the fibrous elements 32 and the plane 38 to provide biaxial reinforcement of the CFCC component. If oriented perpendicular, the fibers of the next tape lie in planes inclined approximately forty-five degrees to a plane perpendicular to the axis 36 of curvature for the preform bend 34, but in the opposite direction of the plane 38 as represented by the plane 40 in FIG. 5, yielding what is termed a +/!45 degree fiber architecture. The remainder of the preform 30 is constructed in a similar manner, so that the fibers of every other tape are roughly parallel to the plane 38, and tapes therebetween contain fibers that are roughly parallel to the plane 40.

In investigations carried out in furtherance of this invention, the +/!45 degree fiber architecture has been shown to be particularly effective in inhibiting delamination of CFCC articles produced in the manner described above, namely, thermal processing that includes tape consolidation, binder bum-out, and melt infiltration, during which delamination is likely to occur in prior art preforms of the type represented in FIGS. 1 and 2. However, suitable fiber architectures are more broadly believed to include biaxial and multi-axial architectures in which all fibers are oriented at angles of about ten to ninety degrees to a plane perpendicular to the bend axis 36 of curvature, specific examples of which are +80/!10, +70/!20, +60/!30, and 90/+30/!30 degrees.

While not wishing to be held to any particular theory, the ability of the fiber architecture of this invention to avoid or at least greatly inhibit the formation of delamination defects during thermal processing of the preform 30 may be related to the occurrence of fiber shifts that may occur during thermal processing, particular during consolidation of the prepreg tapes. Such a shift phenomena is represented in FIG. 5 as occurring in a limited portion 32A (represented with broken lines) of each fibrous element 32 lying entirely within the bend 34. The shift is represented in FIG. 5 as occurring roughly parallel to the axis 36 of curvature of the bend 34 and in a leftward direction as viewed in FIG. 5, though it is foreseeable that a shift could occur in either direction. The amount of shift is likely to be very small and therefore difficult to measure, and is also likely to vary depending on the materials of the fibrous elements 32 and ceramic matrix, the dimensions of the fibrous elements 32, and thermal processing conditions.

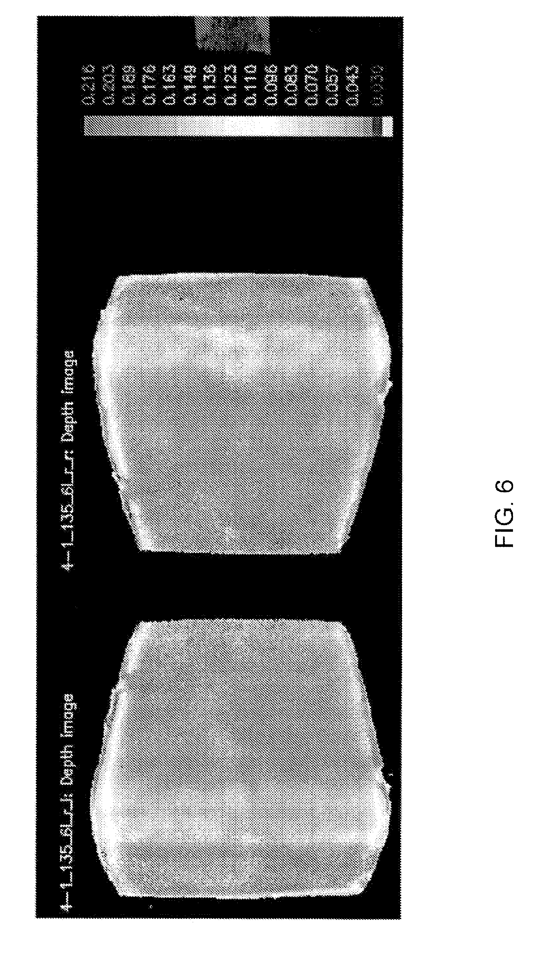

Defect-free CFCC shrouds that have been produced in accordance with this invention include the shroud whose IR thermographic image is shown in FIG. 6. Notably, other than having a +/!45 degree fiber architecture, the shroud was processed identically and from the same raw materials as those used to produce the shrouds of FIGS. 3 and 4, evidencing the isolated effect that fiber architecture had on avoiding delamination defects.

While the invention has been described in terms of specific embodiments, it is apparent that other forms could be adopted by one skilled in the art. Therefore, the scope of the invention is to be limited only by the following claims.

Various aspects and embodiments of the present invention are defined by the following numbered clauses:
1. A process for inhibiting delamination in a bend of a component formed of a continuous fiber-reinforced composite material comprising layers in which each of the layers contains an array of unidirectional fibrous elements in a matrix material and at least a portion of the bend is defined by an axis of curvature, the process comprising:
   forming prepreg tapes, each of the prepreg tapes containing a matrix precursor, a binder, and one of the arrays of the unidirectional fibrous elements so as to form one of the layers of the composite when sufficiently heated to burn out the binder and convert the matrix precursor to the matrix material of the component;
   laying up the prepreg tapes so as to form a preform of the component and define the bend thereof so that each of the unidirectional fibrous elements of at least a first of the prepreg tapes traverses the bend and the unidirectional fibrous elements of all of the prepreg tapes lie in planes that are not perpendicular to the axis of curvature of the bend; and then
   heating the preform under external pressure to consolidate the prepreg tapes, wherein delamination of the prepreg tapes in the bend is inhibited as a result of none of the unidirectional fibrous elements lying in a plane that is perpendicular to the axis of curvature of the bend.
2. The process according to clause 1, wherein the heating step further comprises burning out the binder, converting the matrix precursor to the matrix material of the component, and converting the prepreg tapes to the layers of the composite, the layers being bonded to each other by the matrix material.
3. The process according to clause 2, further comprising melt infiltrating the matrix material after the heating step to fill porosity within the component resulting from burn-out of the binder.
4. The process according to clause 1, wherein each of the unidirectional fibrous elements of at least the first prepreg tape lies in a plane that is about ten to ninety degrees to a plane perpendicular to the axis of curvature of the bend.
5. The process according to clause 4, wherein each of the unidirectional fibrous elements of a second of the prepreg tapes lies in a plane that is perpendicular to the plane of the unidirectional fibrous elements of the first prepreg tape.
6. The process according to clause 5, wherein each of the unidirectional fibrous elements of the first and second prepreg tapes lies in a plane that is about forty-five degrees to a plane perpendicular to the axis of curvature of the bend.
7. The process according to clause 1, wherein each of the unidirectional fibrous elements is an individual fiber.
8. The process according to clause 1, wherein each of the unidirectional fibrous elements is a fiber tow.
9. The process according to clause 1, wherein the continuous fiber-reinforced composite material is a ceramic matrix composite material.
10. The process according to clause 9, wherein the unidirectional fibrous elements are silicon carbide reinforcement fibers and the matrix precursor is a silicon carbide precursor.
11. The process according to clause 1, further comprising the step of melt infiltrating the matrix material after the heating step to fill porosity within the component.
12. The process according to clause 1, wherein the component is a component of a gas turbine engine.
13. The process according to clause 12, wherein the component is a turbine shroud.
14. The turbine shroud produced by the process according to clause 13.
15. A process for inhibiting delamination in a bend of a turbine shroud formed of a continuous fiber-reinforced ceramic composite material comprising at least first and second sets of layers in which each of the first and second sets of layers contains a unidirectional array of individual fibers, the fibers in the first set of layer are parallel to each other, the fibers in the second set of layers are parallel to each other and transverse to the fibers in the first set of layers, and at least a portion of the bend is defined by an axis of curvature, the process comprising:
   forming prepreg tapes, each of the prepreg tapes containing a ceramic matrix precursor, a binder, and one of the unidirectional arrays of the individual fibers so as to form one layer of one of the first and second sets of layers of the composite when sufficiently heated to burn out the binder and convert the matrix precursor to the matrix material of the component;
   laying up the prepreg tapes so as to form a preform of the component and define the bend thereof, the fibers traversing the bend and lying in planes that are not perpendicular to the axis of curvature of the bend;
   heating the preform under external pressure to consolidate the prepreg tapes and cause the fibers to shift at the bend, wherein delamination of the prepreg tapes in the bend is inhibited as a result of none of the unidirectional fibrous elements lying in a plane that is perpendicular to the axis of curvature of the bend and limited portions of the fibers lying entirely within the bend shifting in a direction parallel to the axis of curvature of the bend;
   heating the preform to burn out the binder, convert the ceramic matrix precursor to a ceramic matrix material of the shroud, and convert the prepreg tapes to the first and second sets of layers that are bonded to each other by the ceramic matrix material; and then
   melt infiltrating the ceramic matrix material to fill porosity therein resulting from burn-out of the binder;
   wherein the resulting shroud is substantially free of delaminations of the first and second sets of layers in the bend.
16. The process according to clause 15, wherein each of the fibers of the first and second sets of layers lies in a plane that is about ten to ninety degrees to a plane perpendicular to the axis of curvature of the bend.
17. The process according to clause 15, wherein the fibers of the first and second sets of layers lie in planes that are about forty-five degrees to a plane perpendicular to the axis of curvature of the bend.
18. The process according to clause 15, wherein each of the fibers is a silicon carbide fiber and the ceramic matrix material comprises silicon carbide.
19. The turbine shroud produced by the process according to clause 18.
20. The turbine shroud produced by the process according to clause 15.

## Claims

1. A process for inhibiting delamination in a bend (34) of a component formed of a continuous fiber-reinforced composite material comprising layers in which each of the layers contains an array of unidirectional fibrous elements (32) in a matrix material and at least a portion of the bend (34) is defined by an axis (36) of curvature, the process comprising:
forming prepreg tapes, each of the prepreg tapes containing a matrix precursor, a binder, and one of the arrays of the unidirectional fibrous elements (32) so as to form one of the layers of the composite when sufficiently heated to burn out the binder and convert the matrix precursor to the matrix material of the component;
laying up the prepreg tapes so as to form a preform (30) of the component and define the bend (34) thereof so that each of the unidirectional fibrous elements (32) of at least a first of the prepreg tapes traverses the bend (34) and the unidirectional fibrous elements (32) of all of the prepreg tapes lie in planes (38,40) that are not perpendicular to the axis (36) of curvature of the bend (34); and then
heating the preform (30) under external pressure to consolidate the prepreg tapes, wherein delamination of the prepreg tapes in the bend (34) is inhibited as a result of none of the unidirectional fibrous elements (32) lying in a plane that is perpendicular to the axis (36) of curvature of the bend (34).

2. The process according to claim 1, **characterized in that** the heating step further comprises burning out the binder, converting the matrix precursor to the matrix material of the component, and converting the prepreg tapes to the layers of the composite, the layers being bonded to each other by the matrix material.

3. The process according to claim 2, further comprising melt infiltrating the matrix material after the heating step to fill porosity within the component resulting from burn-out of the binder.

4. The process according to any one of claims 1 to 3, **characterized in that** each of the unidirectional fibrous elements (32) of at least the first prepreg tape lies in a plane (38) that is about ten to ninety degrees to a plane perpendicular to the axis (36) of curvature of the bend (34).

5. The process according to claim 4, **characterized in that** each of the unidirectional fibrous elements (32) of a second of the prepreg tapes lies in a plane (40) that is perpendicular to the plane (38) of the unidirectional fibrous elements (32) of the first prepreg tape.

6. The process according to claim 5, **characterized in that** each of the unidirectional fibrous elements (32) of the first and second prepreg tapes lies in a plane (38,40) that is about forty-five degrees to a plane perpendicular to the axis (36) of curvature of the bend (34).

7. The process according to any one of claims 1 to 6, **characterized in that** the continuous fiber-reinforced composite material is a ceramic matrix composite material.

8. The process according to any one of claims 1 to 7, **characterized in that** the unidirectional fibrous elements (32) are silicon carbide reinforcement fibers (32) and the matrix precursor is a silicon carbide precursor.

9. The process according to any one of claims 1 to 8, further comprising the step of melt infiltrating the matrix material after the heating step to fill porosity within the component.

10. The process according to any one of claims 1 to 9, **characterized in that** the component is a component of a gas turbine engine.

11. A process for inhibiting delamination in a bend of a turbine shroud formed of a continuous fiber-reinforced ceramic composite material comprising at least first and second sets of layers in which each of the first and second sets of layers contains a unidirectional array of individual fibers, the fibers in the first set of layer are parallel to each other, the fibers in the second set of layers are parallel to each other and transverse to the fibers in the first set of layers, and at least a portion of the bend is defined by an axis of curvature, the process comprising:
forming prepreg tapes, each of the prepreg tapes containing a ceramic matrix precursor, a binder, and one of the unidirectional arrays of the individual fibers so as to form one layer of one of the first and second sets of layers of the composite when sufficiently heated to burn out the binder and convert the matrix precursor to the matrix material of the component;
laying up the prepreg tapes so as to form a preform of the component and define the bend thereof, the fibers traversing the bend and lying in planes that are not perpendicular to the axis of curvature of the bend;
heating the preform under external pressure to consolidate the prepreg tapes and cause the fibers to shift at the bend, wherein delamination of the prepreg tapes in the bend is inhibited as a result of none of the unidirectional fibrous elements lying in a plane that is perpendicular to the axis of curvature of the bend and limited portions of the fibers lying entirely within the bend shifting in a direction parallel to the axis of curvature of the bend;
heating the preform to burn out the binder, convert the ceramic matrix precursor to a ceramic matrix material of the shroud, and convert the prepreg tapes to the first and second sets of layers that are bonded to each other by the ceramic matrix material; and then
melt infiltrating the ceramic matrix material to fill porosity therein resulting from burn-out of the binder;
wherein the resulting shroud is substantially free of delaminations of the first and second sets of layers in the bend.

12. The process according to claim 11, wherein each of the fibers of the first and second sets of layers lies in a plane that is about ten to ninety degrees to a plane perpendicular to the axis of curvature of the bend.

13. The process according to claim 11, wherein the fibers of the first and second sets of layers lie in planes that are about forty-five degrees to a plane perpendicular to the axis of curvature of the bend.

14. The process according to any of claims 11 to 13, wherein each of the fibers is a silicon carbide fiber and the ceramic matrix material comprises silicon carbide.

15. A turbine shroud produced by the process according to any of claims 1 to 14.
